# EUROPEAN PATENT APPLICATION

(11) **EP 3 316 629 A1**
(43) Date of publication of application: **02.05.2018**
(21) Application number: 16196551.2
(22) Date of filing: 31.10.2016
(51) Int. Cl.: H04W 52/02

(54) **METHOD FOR COMMUNICATING, COMPUTER PROGRAM, WIRELESS COMMUNICATION DEVICE, WIRELESS COMMUNICATIONS PROCESSOR, TRANSMITTER, AND APPLICATION PROCESSOR**

(71) Applicant: Intel IP Corporation, Santa Clara, CA 95054 (US)
(72) Inventor: Parron, Jerome, 90762 Fürth (DE); Prat, Gideon, deceased (IL)
(74) Representative: 2SPL Patentanwälte PartG mbB

(57) **Abstract**

A method for communicating includes providing scheduling information for a wireless communications processor. A starting point of an uplink transmission opportunity is derivable from the scheduling information. Additionally, the method includes aligning, on basis of the provided scheduling information, an activity of an application processor to the uplink transmission opportunity.

## Description

### Field

Examples relate to communications involving a wireless communications processor and an application processor and in particular to methods for communicating, computer programs, wireless communication devices, wireless communications processors, transmitters, and application processors.

### Background

Wireless communication devices may be optimized with respect to low power consumption. To reduce a power consumption of a wireless communication device, typically elements of the wireless communication device, e.g. an application processor, a modem, and/or a display of the wireless communication device, are operated according to individual power saving schemes.

There may be a desire for improved concepts for reducing a power consumption for communications.

### Brief description of the Figures

Some examples of apparatuses and/or methods will be described in the following by way of example only, and with reference to the accompanying figures, in which
- Fig. 1: illustrates a flowchart of an example of a method for communicating;
- Fig. 2: illustrates a flowchart for various examples for aligning an activity of an application processor;
- Fig. 3: illustrates a block diagram of an example of an alignment architecture;
- Fig. 4: illustrates a block diagram of an example of an alignment architecture;
- Fig. 5a: illustrates an example of an activity of a wireless communications processor, wherein no uplink data is transmitted from an application processor;
- Fig. 5b: illustrates an example of an activity of a wireless communications processor, wherein uplink data is transmitted from an application processor without alignment;
- Fig. 5c: illustrates an example of an activity of a wireless communications processor, wherein delay insensitive uplink data is transmitted from an application processor;
- Fig. 5d: illustrates an example of an activity of a wireless communications processor, wherein delay sensitive uplink data is transmitted from an application processor;
- Fig. 6: schematically illustrates a first example of a wireless communication device;
- Fig. 7: schematically illustrates a second example of a wireless communication device;
- Fig. 8: schematically illustrates a first example of a wireless communications processor;
- Fig. 9: schematically illustrates a second example of a wireless communications processor;
- Fig. 10: schematically illustrates an example of a transmitter; and
- Fig. 11: schematically illustrates an example of an application processor.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

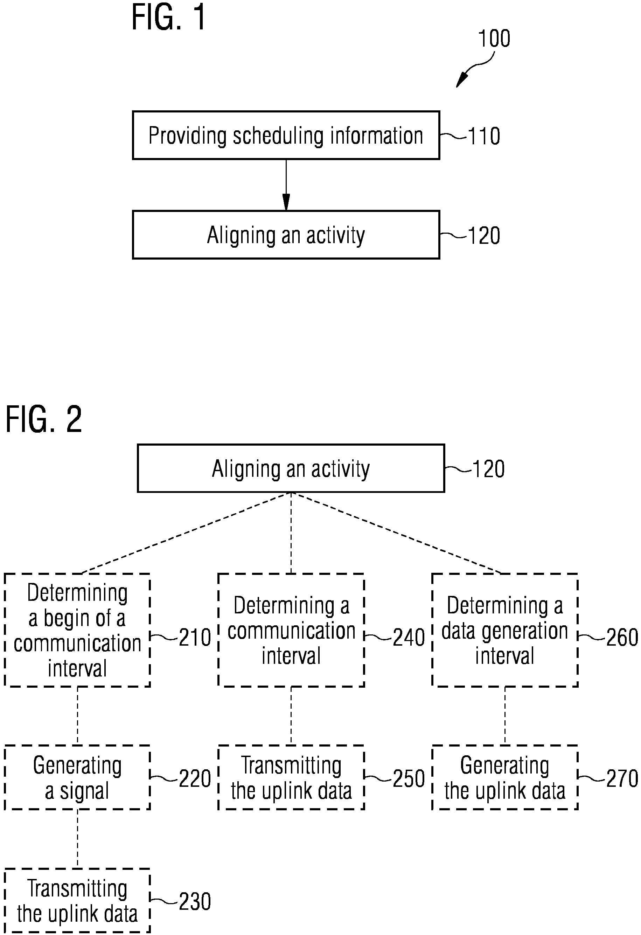

Fig. 1 illustrates a flowchart of an example of a method 100 for communicating. The method 100 comprises providing 110 scheduling information for a wireless communications processor. A starting point of an uplink transmission opportunity is derivable from the scheduling information. Additionally, the method 100 comprises aligning 120, on basis of the provided scheduling information, an activity of an application processor to the uplink transmission opportunity.

The wireless communications processor and the application processor may be elements of a wireless communication device. Further, the wireless communications processor and the application processor may each be operated according to a respective power saving scheme. The application processor may enter an active operating state, when performing the activity, and an energy saving operating state otherwise. Further, the wireless communications processor may enter an active operating state, when receiving data from a base station or transmitting data to the base station, and an energy saving operating state otherwise. Additionally, the wireless communications processor may enter the active operating state upon receiving data from the application processor. Aligning 120 of the activity may comprise performing the activity at or delaying the activity to a predetermined instant of time before or after the starting point of the uplink transmission opportunity. A time difference between the predetermined instant of time and the starting time may be chosen platform dependent. For example, the time difference may be in the range of 1ms to 10ms (e.g. the time difference may be 1ms, 2ms, 3ms, 4ms, 5ms, 6ms, 8ms, or 10ms). Alternatively, aligning 120 of the activity may comprise performing the activity at or delaying the activity to the starting point of the uplink transmission opportunity. In this way, the wireless communications processor and/or the application processor may stay longer in its energy saving operating state. By this, a power consumption of the wireless communications processor and/or of the application processor may be reduced. In this way, a power consumption of a wireless communication device using the application processor and the wireless communications processor as part of its transmission circuitry may be reduced.

The uplink transmission opportunity may be a time slot for transmitting uplink data from the wireless communication device to a base station according to a communication standard used for communication between the wireless communication device and the base station. Additionally, the starting point of the uplink transmission opportunity may be a starting point of the time slot for transmitting uplink data or of a time slot for requesting an uplink resource for an uplink transmission. The wireless communications processor may enter the active state at the starting point of the uplink transmission opportunity or at the predetermined instant of time before the starting point of the uplink transmission opportunity. For example, an uplink may comprise communication from the wireless communication device to the base station. For example, uplink data may be data intended for transmission from the wireless communications device to the base station. The uplink data may, for example, be generated by the application processor.

The wireless communications processor may be a processor configured to manage wireless communication or radio functions of the wireless communications device. For example, the wireless communications processor may be a baseband processor, a cellular processor, a modem processor, a Worldwide Interoperability for Microwave Access (WIMAX) processor, a Wireless Local Area Network (WLAN) processor, a Bluetooth processor, or a ZigBee processor. The wireless communications processor may be an element of a transmitter or transceiver of the wireless communication device. The transmitter or transceiver may be configured to operate according to every known and future telecommunication standard, such as for example: one of the mobile communication systems standardized by the 3rd Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16, Wireless Local Area Network (WLAN) IEEE 802.11, Bluetooth, or ZigBee IEEE 802.15.4, generally any system based on Time Division Multiple Access (TDMA), Frequency Division Multiple Access (FDMA), Orthogonal Frequency Division Multiple Access (OFDMA), Code Division Multiple Access (CDMA), etc. The terms mobile communication system and mobile communication network may be used synonymously.

The wireless communication device may correspond to a smartphone, a cell phone, a wearable, user equipment, radio equipment, a mobile, a mobile station, a mobile platform, a mobile user device, a laptop, a notebook, a personal computer, a Personal Digital Assistant (PDA), a Universal Serial Bus (USB) -stick, a car, a mobile relay transceiver for D2D communication, etc. The wireless communication device may also be referred to as User Equipment (UE) or mobile in line with the 3GPP terminology.

The application processor may be a general-purpose processor such as a microprocessor, a microcontroller, a digital signal processor, or a central processing unit. For example, the application processor may be configured to execute an operating system, an application and/or an app. For example, the application may generate uplink data when executed by the application processor. For example, the application may be a web browser, a file transfer protocol (FTP) client, an email client, an instant messenger client, a video streaming client, a position tracking application, a voice over internet protocol (VoIP) application, a voice over LTE (VoLTE) application, a social media network client, or a smart car control application. For example, the uplink data may comprise a hypertext transfer protocol (HTTP) request, an FTP request, an email message, an instant message, a video streaming control information, a current position of the wireless communication device, audio data, video data, and/or control data.

The activity of the application processor may comprise transmitting uplink data to the wireless communications processor, generating uplink data, sampling of audio data, processing image or video data, and/or determining a sensor value. For example, the wireless communication device may comprise a microphone, a camera, a global positioning system (GPS) sensor, a temperature sensor, and/or a magnetic field sensor.

The application processor and the wireless communications processor may be configured to communicate via an inter-processor communication scheme. For example, the wireless communications processor and the application processor may communicate via a communication link (e.g. a serial communication link) or an interface bridge. Alternatively, the wireless communications processor and the application processor may be configured to access a shared memory element.

Providing 110 of the scheduling information may comprise the wireless communications processor generating the scheduling information. Alternatively, providing 110 of the scheduling information may comprise the wireless communications processor receiving the scheduling information from a base station of a mobile communication system. For example, the wireless communications processor may be configured to negotiate the uplink transmission opportunity with the base station. Once negotiated, the wireless communications processor may know the starting time of the uplink transmission opportunity and may provide it with the scheduling information.

For example, the scheduling information may comprise at least one of an absolute starting time of the transmission opportunity, a relative starting time of the transmission opportunity, a starting time of a further transmission opportunity in combination with an uplink scheduling configuration, a scheduling request configuration, a discontinuous reception cycle configuration, and a semi-persistent scheduling cycle configuration. In this way, the starting point of the transmission opportunity may be efficiently derived.

For example, the absolute starting time of the transmission opportunity may be an exact time of the starting point of the transmission opportunity. For example, the relative starting time of the transmission opportunity may be a time interval or a relative time between the current time and the starting time of the transmission opportunity.

According to an LTE or an LTE-A telecommunication standard, a wireless communications processor may request, during a scheduling request slot (SR), from the base station a scheduling of an uplink resource for transmitting uplink data. The base station may grant the request and the wireless communications processor may transmit the uplink data to the base station upon receiving the grant. Additionally, the base station may assign a plurality of scheduling request slots to the wireless communications processor. The scheduling request slots may be periodically recurring time slots. For example, the scheduling request configuration may comprise or indicate a starting time of a next scheduling request slot and/or a periodicity of the scheduling request slots (e.g. a time difference between starting times of two subsequent scheduling request slots).

For example, the discontinuous reception cycle (DRX) may be defined in a discontinuous reception scheme. The discontinuous reception cycle may comprise an on-duration interval, during which the wireless communications processor or the wireless communication device may monitor a control channel, and a subsequent discontinuous reception cycle period, during which the wireless communications processor or the wireless communication device may skip a reception of downlink channels for battery saving purposes. For example, an on-duration start slot may be a begin of an on-duration interval. For example, the discontinuous reception cycle configuration may comprise a starting time of a next on-duration start slot and/or a discontinuous reception cycle length (e.g. a time difference between two subsequent on-duration start slots).

For example, the semi-persistent scheduling (SPS) cycle may be defined in a semi-persistent scheduling scheme. The semi-persistent scheduling cycle may comprise a pattern of semi-persistent scheduling transmission slots assigned to the wireless communications processor or the wireless communication device for transmitting uplink data to the base station. For example, the semi-persistent scheduling cycle configuration may comprise a starting time of a next semi-persistent scheduling transmission slot, the pattern of the semi-persistent scheduling transmission slots, and/or a semi-persistent scheduling cycle length (e.g. a time difference between starting points of two subsequent semi-persistent scheduling cycles).

For example, the scheduling request slot, the discontinuous reception scheduling scheme and/or the semi-persistent scheduling scheme may be compliant to a today's or future 3GPP telecommunication standard, e.g. LTE, LTE-A or the like.

Depending on the implementation, the uplink transmission opportunity may be selected from the group of a scheduling request slot, an on-duration start slot of a discontinuous reception scheduling scheme, and a transmission slot of a semi-persistent scheduling scheme. By this, the method for communicating may be implemented without modification of the communication protocol used for communication between the wireless communication device and the base station.

Fig. 2 illustrates a flowchart for various examples for aligning 120 an activity of an application processor. The flowchart comprises three optional methods to align the activity of the application processor.

According to the first optional example illustrated in Fig. 2, aligning 120 of the activity may comprise the wireless communications processor determining 210, on basis of the provided scheduling information, a begin of a communication interval for transmitting uplink data from the application processor to the wireless communications processor. Additionally, aligning 120 of the activity may comprise the wireless communications processor generating 220, at the determined begin of the communication interval, a signal indicating a request to transmit the uplink data. Further, aligning 120 of the activity may comprise the application processor transmitting 230 the uplink data to the wireless communications processor upon detecting the generated signal. In this way, a transmission of the uplink data from the application processor to the wireless communication processor before the begin of the communication interval may be avoided. By this, a wake up of the wireless communication processor from an energy saving operating state by a transmission of uplink data from the application processor to the wireless communication processor before the begin of the communication interval may be avoided. In this way, a power consumption of the wireless communication processor may be reduced. For example, according to an LTE or LTE-A telecommunication standard the base station (e.g. an eNodeB (eNB)) may provide the scheduling information to the wireless communications processor or to the wireless communication device (e.g. user equipment (UE)).

For example, the begin of the communication interval may be determined on basis of the starting time of the uplink transmission opportunity and an estimated length of a needed time interval for transmitting 230 the uplink data from the application processor to the wireless communications processor. For example, the application processor and the wireless communications processor may communicate via a communication link and the length of the time interval needed for transmitting 230 the uplink data may be estimated on basis of an amount of the uplink data and a bit rate or a baud rate of the communication link. For example, a time difference between the begin of the communication interval and the starting time of the uplink transmission opportunity may be of order of magnitude of a length of an on-duration start slot or a scheduling request slot (e.g. the time difference may be 1ms, 2ms, 3ms, 4ms, 5ms, 6ms, 8ms, or 10ms). The begin of the communication interval may be determined platform dependent. The begin of the communication interval may lie before the starting time of the uplink transmission opportunity. For example, a length of the communication interval may be in the range of 1ms to 50ms, in the range of 2ms to 25ms, or in the range of 3ms to 10ms.

Generating 220 the signal may comprise setting or resetting a flag in a flow control mechanism between the application processor and the wireless communications processor. For example, generating 220 the signal may comprise setting a "do-send" flag in the flow control mechanism or resetting a "do-not-send" flag or a "buffer-full" flag in the flow control mechanism. The flow control mechanism may be implemented by a control signal line in a communication interface between the application processor and the wireless communications processor or by reserving in-band control characters. For example, the application processor may be configured to detect the generated signal by detecting the flag or a state of the flag in the flow control mechanism. For example, the application processor may transmit the uplink data to the wireless communications processor via the communication link.

In some examples, the uplink data is generated by an application executed by the application processor. For example, the application may be an instant messenger client and the generated data may comprise a message intended for transmission to an instant messenger server.

For example, the method 100 may comprise the wireless communications processor generating, at an end of the communication interval, a further signal indicating a request to avoid a transmission of uplink data. In this way, a transmission of uplink data from the application processor to the wireless communication processor after the end of the communication interval may be avoided. By this, a wake up of the wireless communication processor from an energy saving operating state by a transmission of uplink data from the application processor to the wireless communication processor after the end of the communication interval may be avoided. In this way, a power consumption of the wireless communication processor may be reduced.

For example, the end of the communication interval may lie before or at an end of the uplink transmission opportunity. For example, the end of the communication interval may coincide with the end of the uplink transmission opportunity. Alternatively, the end of the communication interval may coincide with the starting point of the uplink transmission opportunity.

For example, generating the further signal may comprise setting or resetting a flag in the flow control mechanism between the application processor and the wireless communications processor. For example, generating the further signal may comprise resetting the "do-send" flag in the flow control mechanism or setting the "do-not-send" flag or the "buffer-full" flag in the flow control mechanism.

For example, the method 100 may comprise the wireless communications processor entering an energy saving operating state after generating the further signal. In this way, a power consumption of the wireless communication processor may be reduced.

According to the second optional example illustrated in Fig. 2, aligning 120 of the activity may comprise the application processor determining 240, on basis of the provided scheduling information, a communication interval for transmitting uplink data to the wireless communications processor. Additionally, aligning 120 of the activity may comprise the application processor transmitting 250 the uplink data to the wireless communications processor in the determined communication interval. By this, a transmission of uplink data from the application processor to the wireless communications processor may be avoided outside the communication interval. In this way, the wireless communications processor may stay in an energy saving operating state outside the communication interval. By this, a power consumption of the wireless communication processor may be reduced.

For example, the communication interval may be determined on basis of the starting time of the uplink transmission opportunity or a scheduling request opportunity (e.g. a slot to request a resource), an end of the uplink transmission opportunity and an estimated length of a needed time interval for transmitting 250 the uplink data from the application processor to the wireless communications processor. The uplink transmission opportunity and the scheduling request opportunity may both relate to an uplink transmission. In difference to the scheduling request opportunity the uplink transmission opportunity may be used for data transmission or for transmission of a control signal or message. For example, the application processor and the wireless communications processor may communicate via a communication link and the length of the time interval needed for transmitting 250 the uplink data may be estimated on basis of an amount of the uplink data and a bit rate or a baud rate of the communication link. For example, a begin of the communication interval may lie before the starting time of the uplink transmission opportunity. For example, an end of the communication interval may lie before or at an end of the uplink transmission opportunity. For example, the end of the communication interval may coincide with the end of the uplink transmission opportunity. Alternatively, the end of the communication interval may coincide with the starting point of the uplink transmission opportunity. For example, a length of the communication interval may be in the range of 1ms to 50ms, in the range of 2ms to 25ms, or in the range of 3ms to 10ms.

In some examples, the uplink data is generated by an application executed by the application processor. For example, the application may be an email client and the generated data may comprise an email message intended for transmission to an email server.

For example, by transmitting 250 the uplink data to the wireless communications processor in the determined communication interval an activity of an interface between the application processor and the wireless communications processor, initiated by an uplink data transmission of an application executed by the application processor, may be aligned to a wireless communications processor transmission scheduling timing pattern for power management. In this way, a power consumption of the wireless communications processor may be reduced.

For example, in the second optional example an alignment of an interface between the application processor and the wireless communications processor may be achieved.

For example, determining 240 the communication interval and transmitting 250 the uplink data may be performed by a blocking filter of the application processor. The blocking filter may stop and delay a transmission of uplink data to prevent a wake up of the wireless communications processor. For example, the blocking or delaying decision may be based on wireless communications processor uplink transmission scheduling timing information (e.g. a DRX cycle configuration, a scheduling request configuration, or a SPS cycle configuration), and/or an application uplink traffic class information (e.g. high priority traffic, periodic traffic, or latency insensitive traffic that can be delayed to maximize asleep time). Based on the uplink traffic class, the blocking filter may determine to which uplink transmission opportunity of the wireless communications processor to align (e.g. to an SR slot, an on-duration start slot, or a SPS uplink (UL) transmission (TX) slot).

For example, the blocking filter may be located in the application processor. For example, the blocking filter may be located in a driver for the wireless communications processor (e.g. a modem driver), in a host L2 stack, or in an intermediate driver.

For example, the uplink transmission scheduling timing information of the wireless communications processor may be provided to the application processor by the wireless communications processor. For example, the uplink traffic class information may be determined based on input from an operating system (OS) (e.g. executed by the application processor), a transport bearer characteristic or flow identification.

Alternatively, the blocking filter may be located on the wireless communications processor as discussed in connection with the first optional example. The blocking filter may then trigger a flow control operation for a communication link between the application processor and the wireless communications processor.

For example, the method 100 may comprise the wireless communications processor transmitting the scheduling information to the application processor. In this way, the scheduling information may be efficiently provided to the application processor. For example, the scheduling information may be transmitted via the communication link.

For example, the method 100 may comprise synchronizing a time of the application processor with a time of the wireless communications processor. In this way, the application processor may efficiently determine the starting time of the transmission opportunity. For example, synchronizing the time may comprise transmitting a time stamp from the wireless communications processor to the application processor. For example, the time of the application processor may be synchronized with the time of the wireless communications processor via the communication link.

According to the third optional example illustrated in Fig. 2, aligning 120 of the activity may comprise the application processor determining 260, on basis of the provided scheduling information, a data generation interval for generating uplink data. Additionally, aligning 120 of the activity may comprise the application processor generating 270 the uplink data in the data generation interval. In this way, a generation of uplink data outside the data generation interval may be avoided. By this, the application processor may enter an energy saving operating state outside the data generation interval. In this way, a power consumption of the application processor may be additionally reduced.

For example, the data generation interval may be determined on basis of the starting time of the uplink transmission opportunity and an estimated length of a time interval needed for generating the uplink data. For example, the length of the time interval needed for generating the uplink data may be estimated on basis of a speed or a clock frequency of the application processor. For example, a begin of the data generation interval may lie before the starting time of the uplink transmission opportunity. For example, an end of the data generation interval may lie before or at an end of the uplink transmission opportunity. For example, the end of the data generation interval may coincide with the end of the uplink transmission opportunity. Alternatively, the end of the data generation interval may coincide with the starting point of the uplink transmission opportunity. For example, a length of the data generation interval may be in the range of 1ms to 50ms, in the range of 2ms to 25ms, or in the range of 3ms to 10ms.

In some examples, the uplink data is generated by an application executed by the application processor. For example, the application may be a position tracking application and the generated data may comprise a current position of the wireless communication device. For example, the wireless communications device may comprise a global positioning system (GPS) sensor for detecting the position of the wireless communication device.

For example, aligning 120 of the activity may comprise the application processor determining or delaying an instant of time for scheduling a task. For example, aligning 120 of the activity may comprise the application processor determining an instant of time for sampling audio or an audio signal. The aligning 120 may be performed by a part of an operating system (OS) (e.g. executed by the application processor), a dedicated hardware (HW) or an application itself that is informed of the uplink transmission opportunity and may planify its activity accordingly.

For example, by postponing generating the uplink data to just some time before the uplink transmission opportunity or a starting point of the transmission opportunity a power consumption of the application processor may be reduced and a power save may be achieved. The power save may be achieved by aligning activities of the application processor to a transmission point. In this way, a continuous inactivity duration of the application processor may be increased hence allowing the application processor to go to a deeper sleep state. For example, a power saving gain may be achieved by aligning, upon having a random wake up, the wake up to some reference point so there may be a longer continuous sleep period for the application processor. This kind of delaying uplink data generation may prevent a wake up of the application processor and may increase a sleep duration of the application processor.

For example, by generating 270 the uplink data in the data generation interval a self-wake up timing of an application (e.g. an app) transmitting uplink data may be modified. The application may be executed by the application processor. By this, a wake up of the application processor caused by this application may be aligned to a timing pattern applied by power management of the wireless communications processor.

For example, determining 260 the data generation interval may depend on other power save mechanism of the application processor. If the application processor detects that it has other activity and cannot enter a power save operating state, then this delay of operation may be skipped (e.g. the uplink data may generated immediately).

For example, in the third optional example a wake up of the application processor may be aligned to the wireless communications processor. In this way, a power consumption of the application processor may be reduced in addition to reducing a power consumption of the wireless communications processor.

For example, two information element inputs may be used in the third optional example: the uplink timing information of the wireless communications processor from a power management of the wireless communications processor and the uplink traffic class information from the application or the application processor.

For example, determining 260 the data generation interval and generating 270 the uplink data may be performed by a blocking or delay filter. The blocking or delay filter may prevent an application (e.g. executed by the application processor) from scheduling low priority uplink traffic and thereby from waking up the application processor itself outside of allowed time slots of the wireless communications processor. To do this, the blocking or delay filter may access the application to suggest modification of a time to a next wake up request or access a relevant subscription or scheduling management service of the application processor to achieve the same result. Therefore, in addition to saving wake up events or time of the wireless communications processor a saving of wake up events or time of the application processor may be achieved. The blocking or delay filter may be implemented either in each relevant application or added to a subscription service that manages the timing of these applications in an operating system (e.g. executed by the application processor).

For example, by using existing information in the wireless communications processor (e.g. schedules of the wireless communications processor) and in the application processor (e.g. application and traffic classes), the alignment of traffic generated by the application processor to an uplink transmission opportunity of the wireless communications processor may allow both the wireless communications processor and the application processor to remain longer in a deep sleep state, hence reducing a battery drain.

For example, aligning 120 of the activity may comprise the application processor determining, on basis of the provided scheduling information, a communication interval for transmitting the generated uplink data to the wireless communications processor. Additionally, aligning 120 of the activity may comprise the application processor transmitting the generated uplink data to the wireless communications processor in the determined communication interval. By this, a transmission of uplink data from the application processor to the wireless communications processor may be avoided outside the communication interval. In this way, the wireless communications processor may stay in an energy saving operating state outside the communication interval. By this, a power consumption of the wireless communication processor may be reduced. The communication interval may be determined similar to the determination of the communication interval discussed in connection with the second optional example. Further, transmitting the generated uplink data may be performed similar to the transmission of the uplink data discussed in connection with the second optional example.

Alternatively, the method 100 may comprise the application processor transmitting the generated uplink data to the wireless communications processor directly after generating the uplink data. In this way, a determination of the communication interval may be omitted.

For example, the method 100 may comprise the application processor entering an energy saving operating state after transmitting the generated uplink data to the wireless communications processor. In this way, a power consumption of the application processor may be reduced.

For example, the method 100 may comprise the application processor leaving a further energy saving operating state before generating the uplink data. In this way, a power consumption of the application processor may be reduced.

For example, the method 100 may comprise the wireless communications processor transmitting the scheduling information to the application processor. In this way, the scheduling information may be efficiently provided to the application processor. For example, the scheduling information may be transmitted via the communication link.

For example, the method 100 may comprise synchronizing a time of the application processor with a time of the wireless communications processor. In this way, the application processor may efficiently determine the starting time of the transmission opportunity. For example, synchronizing the time may comprise transmitting a time stamp from the wireless communications processor to the application processor. For example, the time of the application processor may be synchronized with the time of the wireless communications processor via the communication link.

For example, starting points of a plurality of uplink transmission opportunities may be derivable from the scheduling information. The method 100 may comprise determining a transmission priority of the uplink data. Additionally, the method 100 may comprise selecting, on basis of the determined transmission priority, one of the uplink transmission opportunities of the plurality of uplink transmission opportunities for performing an uplink transmission of the uplink data. The activity of the application processor may be aligned to the selected uplink transmission opportunity. In this way, a wake up of the application processor from an energy saving operating state by performing an activity with a low transmission priority may be avoided. By this, a power consumption of the application processor may be reduced. This example may be combined with any of the optional examples for aligning 120 the activity of the application processor discussed in connection with Fig. 2 (e.g. with the first optional example, with the second optional example, or with the third optional example).

For example, determining the transmission priority may comprise performing a classification of the uplink data in high priority traffic, periodic traffic, and/or low latency sensitive traffic. For example, the application processor or the wireless communications processor may be able to distinguish between: high priority traffic, which may be sent at a next possible uplink transmission opportunity, periodic traffic, which may be sent at a next best periodic transmission opportunity in line with the source periodicity, and low latency sensitive traffic, which may delayed to be sent at an uplink transmission opportunity maximizing the sleep time (for instance aligned to the scheduling request slot closest to the on-duration start slot).

For example, a power saving may be maximized for large discontinuous reception cycle lengths (for instance for a connected mode discontinuous reception (C-DRX) cycle length of 160ms or 320ms) and for background traffic, which is delay tolerant.

For example, the transmission priority of the uplink data may be determined based on at least one of a delay sensitivity of the uplink data, a quality of service of an evolved packet system bearer, a service type associated with the uplink data, an application type associated with the uplink data, a quality of service associated with the uplink data, and a protocol type of a service layer associated with the uplink data. In this way, the transmission priority may be efficiently determined. For example, the service type may indicate that the uplink data relates to voice, video streaming, email, or web browsing. For example, the service type may be a background traffic service type.

For example, the application processor may be an element of an internet of things (IoT) device while the wireless communications processor may be an element of a wireless communication device (e.g. a smartphone, a cellular device, or a WLAN/LTE router). The internet of things device may further comprise a sensor and/or an actor for autonomous data collection and/or for autonomously controlling an appliance. For example, the internet of things device may comprise a heart rate sensor, a blood pressure sensor, a temperature sensor, a humidity sensor, an air quality sensor, a light sensor, a controller for a heating system, a controller for an air conditioning system, and/or a light switch. The internet of things device may transmit determined sensor values to a control server and/or may receive control commands from the control server. Additionally, the wireless communication device may act as a relay device or gateway for a communication of the internet of things device with the control server. For example, several external internet of things devices may be connected wired or wireless to the wireless communications device so as to transmit data to the control server via the wireless communication device or its wireless communications processor. For example, the wireless communication device or its wireless communications processor may forward the transmitted data to the control server via a mobile communication network. Depending on the implementation, the wireless communication device or its wireless communications processor may provide the scheduling information to the internet of things devices or their respective application processors. The internet of things devices may then use the scheduling information to align activities of their respective application processors so as to optimize their own sleep time and to also prevent a wake up of the wireless communication device or its wireless communications processor. For example, the activities may comprise determining sensor values and transmitting the determined sensor values to the wireless communication device.

For example, a computer program may include program code, when executed, to cause a programmable processor to perform the method 100.

For example, a non-transitory machine readable storage medium may include program code, when executed, to cause a programmable processor to perform the method 100.

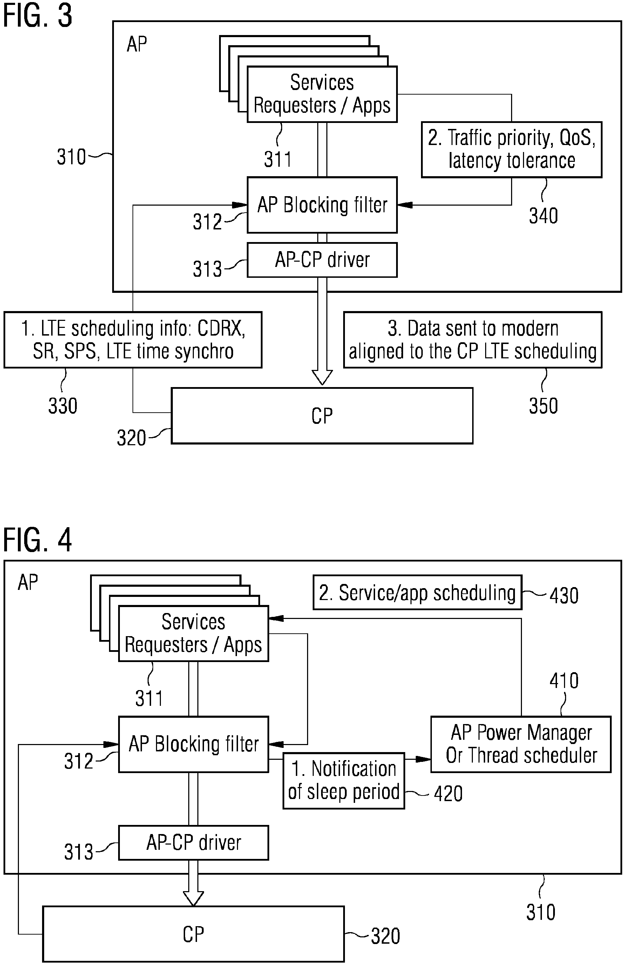

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below (e.g. Fig. 3-11).

Fig. 3 illustrates a block diagram of an example of an alignment architecture. The alignment architecture comprises an application processor (AP) 310 and a wireless communications processor 320. In this example, the wireless communications processor 320 is a cellular processor (CP). The application processor 310 comprises an application block 311 (e.g. a services requesters / apps block or an applications / service request block), a blocking filter 312 (e.g. an application processor (AP) blocking filter), and a driver block 313 (e.g. an application processor cellular processor (AP-CP) driver). Additionally, three process steps 330, 340, 350 are illustrated in the block diagram. The implementation of the alignment architecture may be similar to the implementation of the second optional example discussed in connection with Fig. 2.

Fig. 3 shows an example of an AP-CP alignment architecture. The process steps 330, 340, 350 may comprise multiple handshakes. In the first process step 330 a handshake between the wireless communications processor 320 and the blocking filter 312 is performed. The wireless communications processor 320 may provide the application processor 310 an uplink transmission opportunity based on a connected mode discontinuous reception (CDRX) configuration, a semi-persistent scheduling (SPS) configuration, and/or a scheduling request (SR) configuration. Additionally, a time synchronization (e.g. an LTE time synchronization) between the application processor 310 and the wireless communications processor 320 may be performed. For example, in the first process step 330 an LTE scheduling info comprising CDRX, SR, SPS, and LTE time synchro may be transmitted. In the second process step 340 the application block 311 notifies a priority, a quality of service (QoS), a latency tolerance, and/or a max delay (e.g. of uplink data) to the blocking filter 312. Alternatively, these data may be provided to the blocking filter 312 from another component such as a connection manager (e.g. of the application processor 310). Alternatively, the blocking filter 312 may learn this by data or protocol analysis. For example, in the second process step 320 a traffic priority, QoS, and/or latency tolerance may be transmitted. In the third process step 350, the blocking filter 312 may block or delay a data transmission (e.g. a transmission of uplink data) from the application processor 310 to the wireless communications processor 320 to be aligned to an LTE scheduling and a wake-up of the wireless communications processor 320. For example, in the third process step 350 data (e.g. uplink data) may be sent to the wireless communications processor 320 (e.g. to a modem) according to a CP LTE scheduling.

Fig. 3 shows an example of an architecture, where the blocking filter 312 (e.g. an AP blocking or delay filter) may be introduced to align a sending of data (e.g. uplink data) from the application processor 310 to the wireless communications processor 320 to the LTE scheduling. In this way, an unnecessary wake up of the wireless communication processor 320 may be avoided.

For example, a flow of the AP-CP alignment (e.g. an AP-CP activity alignment) may be as following: The wireless communications processor 320 may notify scheduling information (e.g. uplink (UL) transmission scheduling timing information) to the blocking filter 312 located on the application processor 310. For example, the scheduling information may comprise a time of the next on-duration start and a next SR position and next SPS TX slot along with a DRX cycle length (e.g. short or long), a SR periodicity and a SPS cycle length. The blocking filter 312 (e.g. an blocking or delay filter) in the application processor 310 may look at the requested traffic class from the application. Based on traffic priority and latency tolerance, the blocking filter 312 may determine whether it shall align uplink data (e.g. traffic) to the next or a subsequent on-duration start, to the next SPS TX slot or to the next scheduling request slot. Therefore the application processor 310 may avoid sending any data (e.g. uplink data) over inter-processor communication (IPC) to the wireless communications processor 320 (e.g. a modem) unless it is in time proximity to one of these uplink transmission opportunities or points. The blocking filter 312 may be implemented in the L2 networking stack of the application processor 310, in an intermediate driver, or in drivers for the wireless communications processor 320 (e.g. the modem drivers). This may be implementation dependent. The clock of the wireless communications processor 320 may be made available to the blocking filter 312 as time stamps synchronized to a clock of the application processor 310.

Alternatively, a flow control mechanism may be used. For instance, the wireless communications processor 320 may set a buffer-full flag or a do-not-send flag before going to sleep. A driver (e.g. a modem driver of the application processor 310) may avoid sending anything before the flag is reset by the wireless communications processor 320. The flow control mechanism may use the same wireless communications processor time information and uplink traffic class information as the blocking filter 312 (e.g. a blocking filter mechanism).

Additionally, in order to save power on the side of the application processor 310 and to align a sleep period of the side of the application processor 310 to a sleep period of the wireless communications processor 320 a power manager of the application processor 310 may trigger a sleep of the application processor 310 aligned to a sleep period of the wireless communications processor 320 using inputs from the blocking filter 312. Alternatively, an operating system (OS) thread scheduler (e.g. executed by the application processor 310) may schedule application aligned to sleep period of the wireless communications processor using inputs from the blocking filter 312. Alternatively, the blocking filter 312 may directly notify the application of the next wake up based on the uplink transmission opportunity on the wireless communication processor 320 and a traffic class of the uplink data to send. The application may then postpone its activity to the next uplink transmission opportunity on the wireless communication processor 320.

More details and aspects are mentioned in connection with the embodiments described above or below. The embodiment shown in Fig. 3 may comprise one or more optional additional features corresponding to one or more aspects mentioned in connection with the proposed concept or one or more embodiments described above (e.g. Fig. 1-2) or below (e.g. Fig. 4-11).

Fig. 4 illustrates a block diagram of an example of an alignment architecture. The alignment architecture comprises an application processor (AP) 310 and a wireless communications processor 320. In this example, the wireless communications processor 320 is a cellular processor (CP). The application processor 310 comprises an application block 311 (e.g. a services requesters / apps block), a blocking filter 312 (e.g. an application processor (AP) blocking filter), a driver block 313 (e.g. an application processor cellular processor (AP-CP) driver) and a scheduler block 410. For example, the scheduler block 410 may comprise a power manager of the application processor 310 or a thread scheduler. Additionally, two process steps 420, 430 are illustrated in the block diagram. The implementation of the alignment architecture may be similar to the implementation of the third optional example discussed in connection with Fig. 2.

Fig. 4 shows an example of an AP-CP alignment architecture with an alignment of a wake up of the application processor 310 to the wireless communications processor. Multiple handshakes may be performed in the alignment architecture. In the first process step 420 the blocking filter 312 may notify the scheduler block 410 or any component in charge of an application scheduling (e.g. app scheduling) about the sleep period of the wireless communications processor 320. The sleep period may be computed based on LTE scheduling and uplink traffic class information. Alternatively, the blocking filter 312 may directly communicate with the application to suggest a time to a next wake up. For example, the first process step 420 may comprise a notification of a sleep period. The notification may comprise a sleep duration (e.g. a sleep for the next 15ms) or an actual wake up time with a timestamp. In the second process step 430, the scheduler block 410 may schedule the application only at the next wake up time as notified by the blocking filter 312. The application processor 310 may remain in a sleep state until a next wake up phase. For example, the second process step 430 may comprise a service or app scheduling.

The alignment architecture illustrated in Fig. 4 may differ from the alignment architecture discussed in connection with Fig. 3 by an additional mechanism to have a scheduling of applications (e.g. apps) on the application processor 310 aligned to an LTE uplink transmission opportunity and a wake up of the wireless communications processor 320. For example, scheduling of an application may comprise a wake up of the application or performing a data generation by the application. The application may still run in background but do not do any processing until the point when data may be generated. In this case, the application may start a timer and may, at an expiry of the timer, generate the data. The timer management may be based on an indication of the blocking filter 312. By this, an unnecessary wake up of the application processor 310 may be avoided.

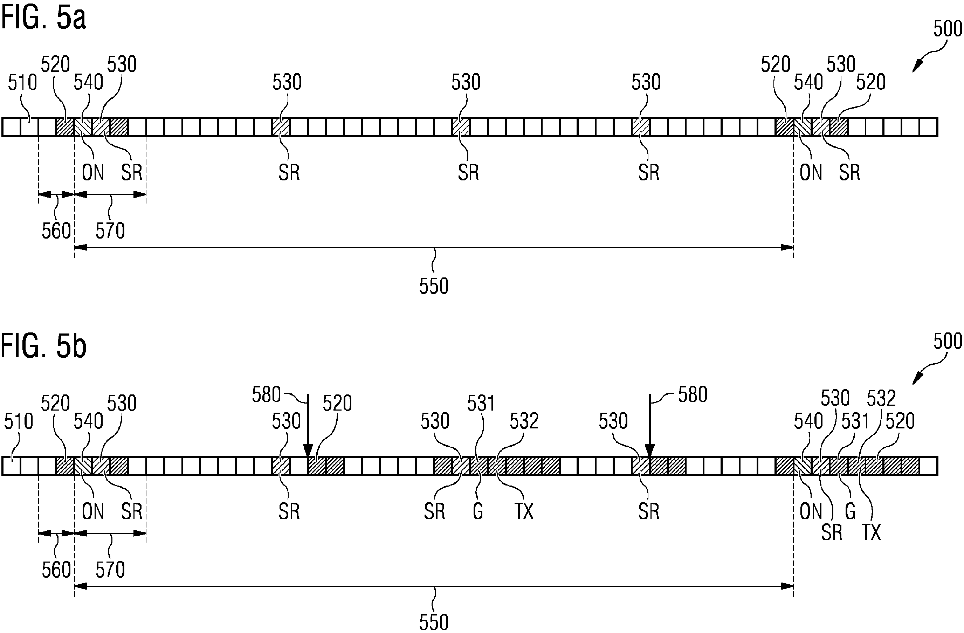

More details and aspects are mentioned in connection with the embodiments described above or below. The embodiment shown in Fig. 4 may comprise one or more optional additional features corresponding to one or more aspects mentioned in connection with the proposed concept or one or more embodiments described above (e.g. Fig. 1-3) or below (e.g. Fig. 5a-11).

Fig. 5a illustrates an example of an activity of a wireless communications processor 320, wherein no uplink data is transmitted from an application processor 310. The activity is illustrated by a timeline 500. In the timeline 500 the time progresses in horizontal direction from left to right. Further, the timeline 500 is divided into several slots 510, 520, 530, 540. The slots 510, 520, 530, 540 are illustrated with equal length for representation purpose only. For example, the slots 510, 520, 530, 540 may each have a different respective length. The illustrated slots 510, 520, 530, 540 may differ from slots compliant to an LTE or LTE-A telecommunication standard. The timeline 500 comprises a plurality of sleep slots 510, in which the wireless communications processor 320 (e.g. a cellular processor (CP)) is in a sleep state (e.g. an energy saving operating state). Further, the timeline 500 comprises several active slots 520, in which the wireless communications processor 320 is in an active state. Additionally, the timeline 500 comprises five scheduling request slots 530 (SR), in which the wireless communications processor 320 may request uplink transmission resources from a base station. A periodicity of the scheduling request slots 530 may be 40ms. For example, the periodicity of the scheduling request slots 530 may be a time interval between two subsequent scheduling request slots 530. The timeline 500 further comprises two on-duration start slots 540 (ON) of a discontinuous reception (DRX) scheme. The discontinuous reception scheme may have a cycle length 550 of 160ms. For example, the cycle length 550 may be a time interval between two subsequent on-duration start slots 540. Additionally, a wake up time interval 560 and a subsequent on-duration time interval 570 are illustrated. In this example, no uplink data (e.g. traffic) is transmitted from the application processor 310 to the wireless communications processor 320.

At a begin of the timeline 500 the wireless communications processor 320 may be in an energy saving operating state as indicated by the sleep slots 510. During the on-duration time interval 570, e.g. at a begin of the on-duration start slot 540, the wireless communications processor 320 may check a control channel for further scheduling information regarding to downlink or uplink transmissions. To allow checking of the control channel the wireless communications processor 320 may be switched to an active operating state during the wake up time interval 560 as indicated by an active slot 520. In case, no downlink transmissions are scheduled for the wireless communications processor 320, the wireless communications processor 320 may return to the energy saving operating state as indicated by sleep slots 520. For example, the wireless communications processor 320 may have an inactivity timer of 4ms. For example, an on-duration timer of the discontinuous reception scheme may have a length of 4ms.

More details and aspects are mentioned in connection with the embodiments described above or below. The embodiment shown in Fig. 5a may comprise one or more optional additional features corresponding to one or more aspects mentioned in connection with the proposed concept or one or more embodiments described above (e.g. Fig. 1-4) or below (e.g. Fig.5b-11).

Fig. 5b illustrates an example of an activity of a wireless communications processor 320, wherein uplink data is transmitted from an application processor 310 without alignment. Additionally to the activity discussed in connection with Fig. 5a uplink data (e.g. traffic) are transmitted from the application processor 310 to the wireless communications processor 320 without alignment. By transmitting the uplink data at transmission points 580 the application processor 310 wakes up the wireless communications processor 320 as indicated by active slots 520 following the transmission points 580. The wireless communications processor 320 may request uplink transmission resources from the base station during a next scheduling request slot 530. The base station may grant the request during a subsequent uplink grant slot 531 (G). Additionally, in case the wireless communications processor 320 received a grant of the requested transmission resources from the base station, the wireless communications processor 320 may perform the uplink transmission to the base station in a subsequent transmission slot 532 (TX). After completing the uplink transmission the wireless communications processor 320 may return to the energy saving operating state as indicated by sleep slots 510.

For example, without synchronization applications or apps executed on the application processor 310 may send data to the wireless communications processor 320 (e.g. a modem) at any time, even while the wireless communications processor 320 is in sleep mode. Thereby, the application processor 310 may unnecessarily wake up the wireless communications processor 320 leading to additional active time.

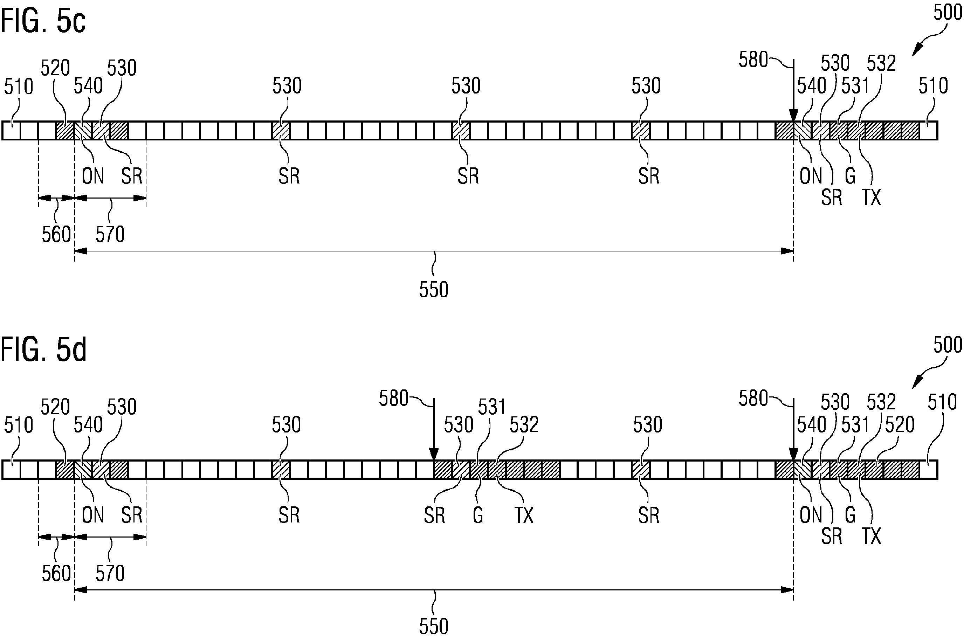

More details and aspects are mentioned in connection with the embodiments described above or below. The embodiment shown in Fig. 5b may comprise one or more optional additional features corresponding to one or more aspects mentioned in connection with the proposed concept or one or more embodiments described above (e.g. Fig. 1-5a) or below (e.g. Fig. 5c-11).

Fig. 5c illustrates an example of an activity of a wireless communications processor 320, wherein delay insensitive uplink data is transmitted from an application processor 310. Additionally to the activity discussed in connection with Fig. 5a uplink data (e.g. traffic) are transmitted from the application processor 310 to the wireless communications processor 320 using an AP-CP alignment for low delay sensitive traffic. The uplink data are transmitted from the application processor 310 to the wireless communications processor 320 at a transmission point 580 coinciding with a begin of an on-duration start slot 540. The wireless communications processor 320 may request uplink transmission resources from a base station during a scheduling request slot 530 following the on-duration start slot 540. The base station may grant the request during a subsequent uplink grant slot 531 (G). Additionally, the wireless communications processor 320 may perform the uplink transmission to the base station in a subsequent transmission slot 532 (TX). After completing the uplink transmission the wireless communications processor 320 may return to the energy saving operating state as indicated by a sleep slot 510. For example, an offset between the transmission point 580 and a scheduling request slot 530 may be determined platform dependent.

For example, the blocking filter 312 on the application processor 310 may detect that the uplink data to be sent is not delay sensitive (for instance server polling to query if a new instant messenger message may available for downloading). The blocking filter 312 may determine that the uplink transmission can be aligned to a scheduling request slot 530 closest to a next on-duration start slot 540. For a typical long discontinuous reception (DRX) cycle configuration of 160ms or 320ms, the uplink data (e.g. app data), or alternatively the scheduling of the application generating the uplink data, may be delayed up to the long discontinuous reception cycle length. In this way, a wake up of the wireless communications processor 320 and a wake up of the application processor 310 may be prevented. Thus, the wireless communications processor 320 and the application processor 310 may fully benefit from the discontinuous reception cycle.

More details and aspects are mentioned in connection with the embodiments described above or below. The embodiment shown in Fig. 5c may comprise one or more optional additional features corresponding to one or more aspects mentioned in connection with the proposed concept or one or more embodiments described above (e.g. Fig. 1-5b) or below (e.g. Fig. 5d-11).

Fig. 5d illustrates an example of an activity of a wireless communications processor 320, wherein delay sensitive uplink data is transmitted from an application processor 310. Additionally to the activity discussed in connection with Fig. 5a uplink data (e.g. traffic) are transmitted from the application processor 310 to the wireless communications processor 320 using an AP-CP alignment for delay sensitive traffic. The uplink data are transmitted from the application processor 310 to the wireless communications processor 320 at transmission points 580 coinciding with a begin of a scheduling request slot 530 and a begin of an on-duration start slot 540 preceding a further scheduling request slot 530. The wireless communications processor 320 may request uplink transmission resources from a base station during the scheduling request slot 530 or the further scheduling request slot 530. The base station may grant the request during a subsequent uplink grant slot 531 (G). Additionally, the wireless communications processor 320 may perform the uplink transmission to the base station in a subsequent transmission slot 532 (TX). After completing the uplink transmission the wireless communications processor 320 may return to the energy saving operating state as indicated by a sleep slot 510.

For example, the blocking filter 312 on the application processor 312 may detect that the uplink data to be sent is delay sensitive (for instance real time traffic such as voice, video, or smart car control). The blocking filter 312 may determine that the uplink (UL) transmission can be aligned to the earliest scheduling request or semi-persistent scheduling transmission opportunity. In this way, a too early wake-up of the wireless communications processor 320 (e.g. a modem) may be avoided as the data can anyway not be transmitted over the air earlier. Further, latency constraints of the application may be satisfied.

For example, uplink traffic classes may be used for a delay decision. Depending on the delay sensitivity of the service, an uplink service transmission request may be postponed to an immediate uplink transmission opportunity or to a later more power efficient uplink transmission opportunity (e.g. a transmission window).

For example, the delay sensitivity of a service may be determined based on quality of service (QoS) of a transport bearer, a flow based quality of service concept (e.g. according to a 5G telecommunication standard), quality of service of a flow, quality of service of an evolved packet system (EPS) bearer, a background traffic service type given by the operating system, a quality of service given in an internet protocol (IP) header, and/or a protocol type of a service layer. For instance, a signaling message such as a session initiation protocol (SIP) request or a hypertext transfer protocol (HTTP) request used for control signaling may be given a higher priority than a file transfer protocol (FTP) used for data transfer.

For example, the blocking filter 312 may obtain this information from the wireless communications processor 320, from a connection manager of the application processor 310, from the application, or by performing uplink data flow analysis.

For example, for a high data throughput scenario, as a high quantity of data shall be transmitted, the wireless communications processor 320 (e.g. a modem) may avoid entering a discontinuous reception scheme. In such case, the uplink data (e.g. traffic) may be immediately sent to the wireless communications processor 320 without restriction.

Figs. 5a to 5d show examples of an activity of a wireless communications processor 120 based on AP -CP alignment. Additionally, Figs. 5a to 5d show how to align uplink traffic of the application processor 310 to activities of the wireless communications processor 320.

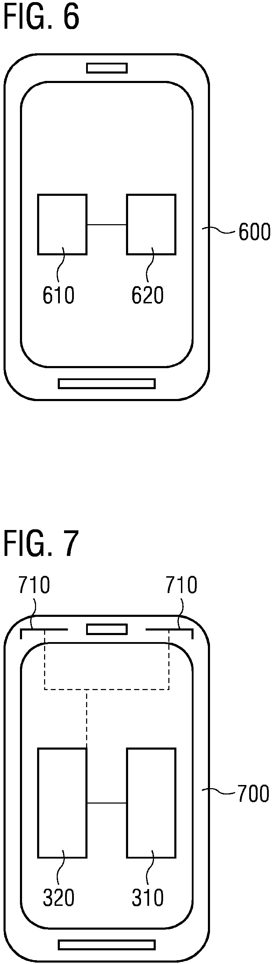

More details and aspects are mentioned in connection with the embodiments described above or below. The embodiment shown in Fig. 5d may comprise one or more optional additional features corresponding to one or more aspects mentioned in connection with the proposed concept or one or more embodiments described above (e.g. Fig. 1-5c) or below (e.g. Fig. 6-11).

Fig. 6 schematically illustrates a first example of a wireless communication device 600. The wireless communication device 600 comprises means 610 for providing scheduling information for a wireless communications processor 320 of the wireless communication device 600. A starting point of an uplink transmission opportunity is derivable from the scheduling information. The wireless communications device 600 further comprises means 620 for aligning, on basis of the provided scheduling information, an activity of an application processor 310 of the wireless communication device 600 to the uplink transmission opportunity. In this way, a wireless communication device with a reduced energy or power consumption may be provided.

For example, the wireless communication device 600 may comprise means for establishing an inter-processor communication between the wireless communications processor 310 and the application processor 320. In this way, an efficient communication between the wireless communications processor 310 and the application processor 320 may be established.

More details and aspects are mentioned in connection with the embodiments described above or below. The embodiment shown in Fig. 6 may comprise one or more optional additional features corresponding to one or more aspects mentioned in connection with the proposed concept or one or more embodiments described above (e.g. Fig. 1-5d) or below (e.g. Fig. 7-11).

Fig. 7 schematically illustrates a second example of a wireless communication device 700. The wireless communication device 700 comprises a wireless communications processor 320 configured to receive scheduling information. A starting point of an uplink transmission opportunity is derivable from the scheduling information. Additionally, the wireless communication device 700 comprises an application processor 310 configured to align an activity with the uplink transmission opportunity. In this way, a wireless communication device with a reduced energy or power consumption may be provided. The wireless communications processor may 320 be coupled to antenna radiators 710 of the wireless communications device 700.

For example, the wireless communications processor 320 may be configured to derive the starting point of the uplink transmission opportunity from the scheduling information. In this way, the starting point may be efficiently provided.

For example, the wireless communications processor 320 may be configured to determine a begin of a communication interval for receiving uplink data on basis of the scheduling information and to generate, at the determined begin of the communication interval, a signal indicating a request to transmit the uplink data. Additionally, the application processor 310 may be configured to transmit the uplink data to the wireless communications processor 320 upon detecting the generated signal. In this way, the wireless communications processor 320 may efficiently align the activity of the application processor 310.

For example, the application processor 310 may be configured to derive the starting point of the uplink transmission opportunity from the scheduling information. In this way, the starting point may be efficiently provided. For example, the scheduling information and a time reference may be given to the application processor 310 for deriving the starting point.

For example, the wireless communications processor 320 may be configured to transmit the received scheduling information to the application processor 310. Additionally, the application processor 310 may be configured to align the activity with the uplink transmission opportunity on basis of the transmitted scheduling information. In this way, the activity may be efficiently aligned.

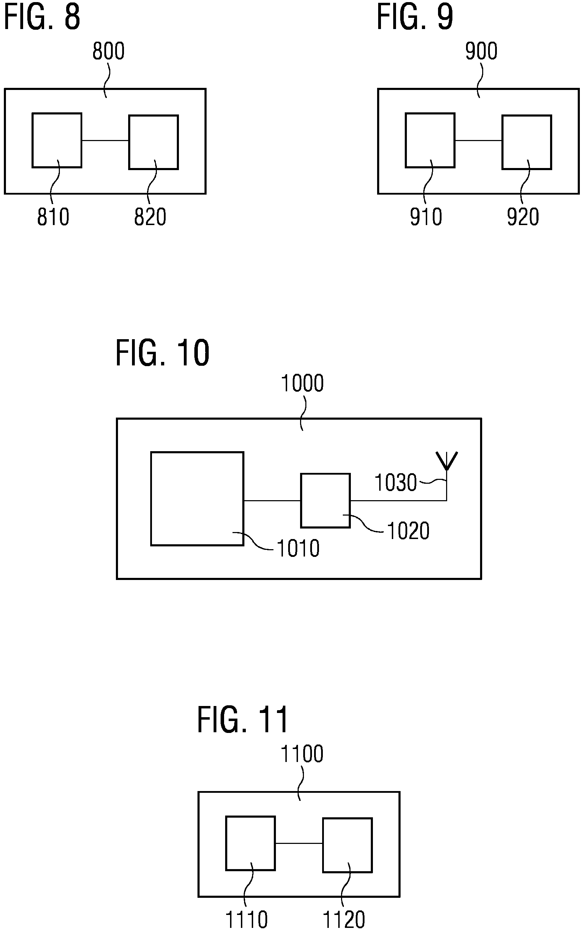

More details and aspects are mentioned in connection with the embodiments described above or below. The embodiment shown in Fig. 7 may comprise one or more optional additional features corresponding to one or more aspects mentioned in connection with the proposed concept or one or more embodiments described above (e.g. Fig. 1-6) or below (e.g. Fig. 8-11).

Fig. 8 schematically illustrates a first example of a wireless communications processor 800. The wireless communications processor 800 comprises means 810 for generating scheduling information. A starting point of an uplink transmission opportunity is derivable from the scheduling information. Additionally, the wireless communications processor 800 comprises means 820 for transmitting the generated scheduling information to an application processor 310. In this way, an activity of the application processor 310 may be efficiently aligned to the uplink transmission opportunity.

For example, the wireless communications processor 800 may comprise means for transmitting a time stamp of the wireless communications processor 800 to the application processor 310. In this way, a time of the wireless communications processor 800 may be efficiently synchronized with a time of the application processor 310.

More details and aspects are mentioned in connection with the embodiments described above or below. The embodiment shown in Fig. 8 may comprise one or more optional additional features corresponding to one or more aspects mentioned in connection with the proposed concept or one or more embodiments described above (e.g. Fig. 1-7) or below (e.g. Fig. 9-11).

Fig. 9 schematically illustrates a second example of a wireless communications processor 900. The wireless communications processor 900 comprises means 910 for determining a begin of a communication interval for receiving uplink data on basis of scheduling information. A starting point of an uplink transmission opportunity is derivable from the scheduling information. Additionally, the wireless communications processor 900 comprises means 920 for generating, at the determined begin of the communication interval, a signal indicating a request to transmit uplink data. In this way, an activity of an application processor 310 may be efficiently aligned to the uplink transmission opportunity.

For example, the wireless communications processor 900 may comprise means for outputting the generated signal. In this way, the generated signal may be efficiently detected by an application processor 310.

More details and aspects are mentioned in connection with the embodiments described above or below. The embodiment shown in Fig. 9 may comprise one or more optional additional features corresponding to one or more aspects mentioned in connection with the proposed concept or one or more embodiments described above (e.g. Fig. 1-8) or below (e.g. Fig. 10-11).

Fig. 10 schematically illustrates an example of a transmitter 1000. The transmitter comprises a wireless communications processor 1010, a radio frequency circuit 1020 and an antenna radiator 1030. In this way, a transmitter with a low energy or power consumption may be provided. For example, the transmitter 1000 may be an element of a wireless communication device.

For example, the radio frequency circuit 1020 may be configured to generate a mobile communications signal from an output of the wireless communications processor 1010. The radio frequency circuit 1020 may comprise a local oscillator circuit and a mixing circuit for generating the mobile communications signal. Additionally, the radio frequency circuit 1020 may comprise an amplifier for amplifying the mobile communications signal. The amplified mobile communications signal may be provided to the antenna radiator 1030 so as to be radiated into the environment.

More details and aspects are mentioned in connection with the embodiments described above or below. The embodiment shown in Fig. 10 may comprise one or more optional additional features corresponding to one or more aspects mentioned in connection with the proposed concept or one or more embodiments described above (e.g. Fig. 1-9) or below (e.g. Fig. 11).

Fig. 11 schematically illustrates an example of an application processor 1100. The application processor 1100 comprises means 1110 for receiving scheduling information. A starting point of an uplink transmission opportunity is derivable from the scheduling information. Additionally, the application processor 1100 comprises means 1120 for aligning, on basis of the received scheduling information, an activity of the application processor 1100 to the uplink transmission opportunity. In this way, an energy efficient application processor may be provided.

For example, the application processor 1100 may comprise means for generating uplink data. The means for aligning may be configured to align an activity of the means for generating to the uplink transmission opportunity. In this way, a generation of uplink data may be efficiently aligned to the uplink transmission opportunity. By this, a power consumption of the application processor 1100 may be reduced.

For example, the application processor 1100 may comprise means for transmitting uplink data. The means for aligning may be configured to align an activity of the means for transmitting to the uplink transmission opportunity. In this way, a transmission of uplink data may be efficiently aligned to the uplink transmission opportunity. By this, a power consumption of the application processor 1100 and/or of an wireless communications processor may be reduced.

More details and aspects are mentioned in connection with the embodiments described above or below. The embodiment shown in Fig. 11 may comprise one or more optional additional features corresponding to one or more aspects mentioned in connection with the proposed concept or one or more embodiments described above (e.g. Fig. 1-10) or below.

Some embodiments relate to an alignment of application scheduling and data transfer to an LTE transmission opportunity.

According to an aspect, in mobile platforms applications may generate traffic that is send to the network via a cellular modem. Applications may run on a different core or processor (e.g. an application processor (AP)) from the modem (e.g. a wireless communications processor or a cellular processor (CP)). The applications in the application processor may operate independently from the wireless communications processor, without information on the states of the wireless communications processor (e.g. a cellular processor central processing unit (CPU)) or of a modem in general. Therefore, applications may often wake up the wireless communications processor for various activities, including uplink (UL) transmission when the wireless communications processor or the modem has no transmit slot. Many of those uplink transmission requests may be time insensitive and therefore may result in scheduling a transmission at the next wireless communications processor slot. Power of the wireless communications processor may be saved if the application processor knew when to wake up the wireless communications processor on transmission slot times. And a power of the application processor may be saved, if apps scheduling on the application processor and hence a wake up of the application processor is aligned to this wireless communications processor scheduling.

According to an aspect, by using the method 100 a low throughput periodic traffic may be generated. For example, different LTE scheduling pattern may be used in the method 100 (e.g. different C-DRX, SR, SPS configuration).

According to an aspect, a software activity in an application processor may be detected using software tracing tools of the application processor.

According to an aspect, when an application sends data to a wireless communications processor (e.g. a modem), a wake up of the wireless communications processor may be triggered and hence a power consumption of the wireless communications processor may be increased.

Example 1 is a method for communicating, comprising providing scheduling information for a wireless communications processor, wherein a starting point of an uplink transmission opportunity is derivable from the scheduling information; and aligning, on basis of the provided scheduling information, an activity of an application processor to the uplink transmission opportunity.

In example 2, in the method of example 1, the scheduling information comprises at least one of an absolute starting time of the transmission opportunity, a relative starting time of the transmission opportunity, a starting time of a further transmission opportunity in combination with an uplink scheduling configuration, a scheduling request configuration, a discontinuous reception cycle configuration, and a semi-persistent scheduling cycle configuration.

In example 3, in the method of example 1 or 2, the uplink transmission opportunity is selected from the group of a scheduling request slot, an on-duration start slot of a discontinuous reception scheduling scheme, and a transmission slot of a semi-persistent scheduling scheme.

In example 4, in the method of any of examples 1 to 3, aligning of the activity comprises the wireless communications processor determining, on basis of the provided scheduling information, a begin of a communication interval for transmitting uplink data from the application processor to the wireless communications processor; the wireless communications processor generating, at the determined begin of the communication interval, a signal indicating a request to transmit the uplink data; and the application processor transmitting the uplink data to the wireless communications processor upon detecting the generated signal.

In example 5, the method of example 4 further comprises the wireless communications processor generating, at an end of the communication interval, a further signal indicating a request to avoid a transmission of uplink data.

In example 6, the method of example 5 further comprises the wireless communications processor entering an energy saving operating state after generating the further signal.

In example 7, in the method of any of examples 1 to 3, aligning of the activity comprises the application processor determining, on basis of the provided scheduling information, a communication interval for transmitting uplink data to the wireless communications processor; and the application processor transmitting the uplink data to the wireless communications processor in the determined communication interval.

In example 8, in the method of any of examples 1 to 3, aligning of the activity comprises the application processor determining, on basis of the provided scheduling information, a data generation interval for generating uplink data; and the application processor generating the uplink data in the data generation interval.

In example 9, in the method of example 8, aligning of the activity further comprises the application processor determining, on basis of the provided scheduling information, a communication interval for transmitting the generated uplink data to the wireless communications processor; and the application processor transmitting the generated uplink data to the wireless communications processor in the determined communication interval.

In example 10, the method of example 8 further comprises the application processor transmitting the generated uplink data to the wireless communications processor directly after generating the uplink data.

In example 11, the method of example 9 or 10 further comprises the application processor entering an energy saving operating state after transmitting the generated uplink data to the wireless communications processor.

In example 12, the method of any of examples 8 to 11 further comprises the application processor leaving a further energy saving operating state before generating the uplink data.

In example 13, the method of any of examples 7 to 12 further comprises the wireless communications processor transmitting the scheduling information to the application processor.

In example 14, the method of any of examples 7 to 13 further comprises synchronizing a time of the application processor with a time of the wireless communications processor.

In example 15, in the method of any of examples 4 to 14, starting points of a plurality of uplink transmission opportunities are derivable from the scheduling information, and the method further comprises determining a transmission priority of the uplink data; and selecting, on basis of the determined transmission priority, one of the uplink transmission opportunities of the plurality of uplink transmission opportunities for performing an uplink transmission of the uplink data; wherein the activity of the application processor is aligned to the selected uplink transmission opportunity.

In example 16, in the method of example 15, the transmission priority of the uplink data is determined based on at least one of a delay sensitivity of the uplink data, a quality of service of an evolved packet system bearer, a service type associated with the uplink data, an application type associated with the uplink data, a quality of service associated with the uplink data, and a protocol type of a service layer associated with the uplink data.

Example 17 is a computer program including program code, when executed, to cause a programmable processor to perform the method of any one of examples 1 to 16.

Example 18 is a non-transitory machine readable storage medium including program code, when executed, to cause a programmable processor to perform the method of any one of examples 1 to 16.

Example 19 is a wireless communication device, comprising means for providing scheduling information for a wireless communications processor of the wireless communication device, wherein a starting point of an uplink transmission opportunity is derivable from the scheduling information; and means for aligning, on basis of the provided scheduling information, an activity of an application processor of the wireless communication device to the uplink transmission opportunity.

In example 20, the wireless communication device of example 19 further comprises means for establishing an inter-processor communication between the wireless communications processor and the application processor.

Example 21 is a wireless communication device, comprising a wireless communications processor configured to receive scheduling information, wherein a starting point of an uplink transmission opportunity is derivable from the scheduling information; and an application processor configured to align an activity with the uplink transmission opportunity.

In example 22, in the wireless communication device of example 21, the wireless communications processor is further configured to derive the starting point of the uplink transmission opportunity from the scheduling information.

In example 23, in the wireless communication device of example 22, the wireless communications processor is further configured to determine a begin of a communication interval for receiving uplink data on basis of the scheduling information and to generate, at the determined begin of the communication interval, a signal indicating a request to transmit the uplink data, and wherein the application processor is configured to transmit the uplink data to the wireless communications processor upon detecting the generated signal.

In example 24, in the wireless communication device of example 21, the application processor is further configured to derive the starting point of the uplink transmission opportunity from the scheduling information.

In example 25, in the wireless communication device of example 24, the wireless communications processor is further configured to transmit the received scheduling information to the application processor, and wherein the application processor is configured to align the activity with the uplink transmission opportunity on basis of the transmitted scheduling information.

Example 26 is a wireless communications processor, comprising means for generating scheduling information, wherein a starting point of an uplink transmission opportunity is derivable from the scheduling information; and means for transmitting the generated scheduling information to an application processor.

In example 27, the wireless communications processor of example 26 further comprises means for transmitting a time stamp of the wireless communications processor to the application processor.

Example 28 is a wireless communications processor, comprising means for determining a begin of a communication interval for receiving uplink data on basis of scheduling information, wherein a starting point of an uplink transmission opportunity is derivable from the scheduling information; and means for generating, at the determined begin of the communication interval, a signal indicating a request to transmit uplink data.

In example 29, the wireless communications processor of example 28 further comprises means for outputting the generated signal.

Example 30 is a transmitter comprising the wireless communications processor of any of examples 26 to 29.

Example 31 is an application processor, comprising means for receiving scheduling information, wherein a starting point of an uplink transmission opportunity is derivable from the scheduling information; and means for aligning, on basis of the received scheduling information, an activity of the application processor to the uplink transmission opportunity.

In example 32, the application processor of example 31 further comprises means for generating uplink data, wherein the means for aligning is configured to align an activity of the means for generating to the uplink transmission opportunity.

In example 33, the application processor of example 31 further comprises means for transmitting uplink data, wherein the means for aligning is configured to align an activity of the means for transmitting to the uplink transmission opportunity.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

A base station may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. The base station may be a wireless interface of a wired network, which enables transmission of radio signals to user equipment (UE), a mobile station, a wireless communication device or a mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method (100) for communicating, comprising:
providing (110) scheduling information for a wireless communications processor (320, 800, 900, 1010), wherein a starting point of an uplink transmission opportunity is derivable from the scheduling information; and
aligning (120), on basis of the provided scheduling information, an activity of an application processor (310, 1100) to the uplink transmission opportunity.

2. The method (100) according to claim 1, wherein the scheduling information comprises at least one of an absolute starting time of the transmission opportunity, a relative starting time of the transmission opportunity, a starting time of a further transmission opportunity in combination with an uplink scheduling configuration, a scheduling request configuration, a discontinuous reception cycle configuration, and a semi-persistent scheduling cycle configuration.

3. The method (100) according to claim 1 or 2, wherein the uplink transmission opportunity is selected from the group of a scheduling request slot, an on-duration start slot of a discontinuous reception scheduling scheme, and a transmission slot of a semi-persistent scheduling scheme.

4. The method (100) according to one of claims 1 to 3, wherein aligning of the activity comprises:
the wireless communications processor (320, 800, 900, 1010) determining (210), on basis of the provided scheduling information, a begin of a communication interval for transmitting uplink data from the application processor (310, 1100) to the wireless communications processor(320, 800, 900, 1010);
the wireless communications processor (320, 800, 900, 1010) generating (220), at the determined begin of the communication interval, a signal indicating a request to transmit the uplink data; and
the application processor (310, 1100) transmitting (230) the uplink data to the wireless communications processor (320, 800, 900, 1010) upon detecting the generated signal.

5. The method (100) according to claim 4, further comprising the wireless communications processor (320, 800, 900, 1010) generating, at an end of the communication interval, a further signal indicating a request to avoid a transmission of uplink data.

6. The method (100) according to one of claims 1 to 3, wherein aligning of the activity comprises:
the application processor (310, 1100) determining (240), on basis of the provided scheduling information, a communication interval for transmitting uplink data to the wireless communications processor (320, 800, 900, 1010); and
the application processor (310, 1100) transmitting (250) the uplink data to the wireless communications processor (320, 800, 900, 1010) in the determined communication interval.

7. The method (100) according to one of claims 1 to 3, wherein aligning of the activity comprises:
the application processor (310, 1100) determining (260), on basis of the provided scheduling information, a data generation interval for generating uplink data; and
the application processor (310, 1100) generating (270) the uplink data in the data generation interval.

8. The method (100) according to claim 7, wherein aligning of the activity further comprises:
the application processor (310, 1100) determining, on basis of the provided scheduling information, a communication interval for transmitting the generated uplink data to the wireless communications processor (320, 800, 900, 1010); and
the application processor (310, 1100) transmitting the generated uplink data to the wireless communications processor (320, 800, 900, 1010) in the determined communication interval.

9. The method (100) according to claim 7, further comprising the application processor (310, 1100) transmitting the generated uplink data to the wireless communications processor (320, 800, 900, 1010) directly after generating the uplink data.

10. The method (100) according to one of claims 6 to 9, further comprising the wireless communications processor (320, 800, 900, 1010) transmitting the scheduling information to the application processor (310, 1100).

11. The method (100) according to one of claims 6 to 10, further comprising synchronizing a time of the application processor (310, 1100) with a time of the wireless communications processor (320, 800, 900, 1010).

12. The method (100) according to one of claims 4 to 11, wherein starting points of a plurality of uplink transmission opportunities are derivable from the scheduling information, the method (100) further comprising
determining a transmission priority of the uplink data; and
selecting, on basis of the determined transmission priority, one of the uplink transmission opportunities of the plurality of uplink transmission opportunities for performing an uplink transmission of the uplink data;
wherein the activity of the application processor (310, 1100) is aligned to the selected uplink transmission opportunity.

13. The method (100) according to claim 12, wherein the transmission priority of the uplink data is determined based on at least one of a delay sensitivity of the uplink data, a quality of service of an evolved packet system bearer, a service type associated with the uplink data, an application type associated with the uplink data, a quality of service associated with the uplink data, and a protocol type of a service layer associated with the uplink data.

14. A computer program including program code, when executed, to cause a programmable processor to perform the method (100) of any one of claims 1 to 13.

15. A wireless communication device (700), comprising:
a wireless communications processor (320, 800, 900, 1010) configured to receive scheduling information, wherein a starting point of an uplink transmission opportunity is derivable from the scheduling information; and
an application processor (310, 1100) configured to align an activity with the uplink transmission opportunity.
